# EUROPEAN PATENT SPECIFICATION

(11) **EP 2 947 839 B1**
(45) Date of publication and mention of the grant of the patent: **16.10.2019**
(21) Application number: 14169327.5
(22) Date of filing: 21.05.2014
(51) Int. Cl.: H04L 29/06, H04L 29/08, H04L 12/725

(54) **Method and apparatus to forward a request for content**
Verfahren und Vorrichtung zur Weiterleitung einer Inhaltsanfrage
Procédé et appareil d'envoi d'une requête pour un contenu

(43) Date of publication of application: 25.11.2015
(73) Proprietor: Alcatel Lucent, 91620 Nozay (FR); INRIA - Institut National de Recherche en Informatique et en Automatique, 78153 Le Chesnay Cedex (FR)
(72) Inventor: Perino, Diego, 91620 NOZAY (FR); Varvello, Matteo, HOLMDEL, NJ New Jersey 07733-1661 (US); Linguaglossa, Leonardo, 91620 NOZAY (FR)
(74) Representative: Camus, Olivier Jean-Claude

(56) References cited:
- US-A1- 2013 242 996
- US-A1- 2014 036 918
- MATTEO VARVELLO ET AL: "Caesar: a Content Router for High Speed Forwarding", INFORMATION-CENTRIC NETWORKING, ACM, 2 PENN PLAZA, SUITE 701 NEW YORK NY 10121-0701 USA, 17 August 2012 (2012-08-17), pages 73-78, XP058008102, DOI: 10.1145/2342488.2342505 ISBN: 978-1-4503-1479-4

## Description

### FIELD OF THE INVENTION

The present invention relates to routing request for content in communication networks.

### BACKGROUND OF THE INVENTION

The realm of telecommunication has evolved drastically for the last decades, driven by new technologies and new habits of consumers. The increasing number of users has shown the limitations of widely used network architecture. For example the Internet Protocol version 4 "IPv4" is limited in terms of number of Internet Protocol "IP" address, needing then to move to Internet Protocol version 6 "IPv6" that drastically increases the number of IP addresses. Content delivery mechanisms have been relying on centralized architecture. For example a content is stored on a specific location, reachable by its IP address. A user requesting said content is routed amongst the intermediate nodes of a communication network, up to the content location. Such mechanism is not adapted to nowadays constraints due to various reasons. The process of finding a route may be long and complex in case of numerous nodes to traverse, rendering then said mechanism inefficient. Moreover the process of looking up the IP address is related to looking up the server hosting the content at first, and not the content by itself. Another issue is the centralization of a content which may overwhelm a server that hosts a frequently requested content. Mirroring, caching of content on plurality of servers are techniques to mitigate centralization issues, but cost wise content replication has to be limited.

Content centric networks or information centric networks are architectural approaches to match the evolution of content consumption. Such architectural approaches enrich network layer functions with content awareness so that routing, forwarding, caching operations on content are performed on their names rather than on IP addresses. Hierarchical name-based structure for content names is a common scheme in-use. In such scheme, the forwarding operation is an important phase for finding a route upon a request for a content. Said request is received by a content router which shall check if it possesses said content, and otherwise find the most appropriate next content router to forward the request. Each content router of a communication networks generally uses a Forward Information Base (FIB) that references forwarding information for each known content name. A FIB is then a crucial element of a content router. Prior art describes some techniques to manage a FIB using for example various longest prefix matching LPM methods. However existing methods are not adapted for managing efficiently a very large number of content names. For example existing methods often do not ensure the performance of lookup in the FIB. They may not also guarantee that the selected forward information has been chosen with a good positive probability. Others limitations of existing methods reside in the need to use dedicated or accelerated hardware, such as Field-Programmable Gate Array (FPGA) or Application Specific Integrated Circuit (ASIC) for searching in the FIB, that increases the cost of the content routers and are not adapted with routers structured with other kinds of processors such as a General Purpose Processor (GPP).

It is then required to process a content request by looking up more efficiently in large forward information base of a content router, and to find the most relevant forwarding information.

US 2014/0036918 A1 discloses a method for forwarding a message.

### SUMMARY OF THE INVENTION

The invention is defined by claims 1 and 14.

The invention aims to remedy all or some of the disadvantages of the above identified prior art. It particularly proposes ways for a content router to forward efficiently a request for a content item.

A first aspect of the invention relates then to a method for a content router in a network for forwarding a request comprising a requested content name being a set of ordered components, said content router comprising a routing table and a first plurality of content names and a plurality of forwarding interfaces, said routing table associating each content name from the first plurality of content names to at least one forwarding interface from the plurality of forwarding interfaces, said method comprising the following initialization step performed by the content router:
- initializing a referencing array with signatures of the first plurality of content names, each signature being a representation of at least one content name,
and said method comprising the following steps performed in real-time by the content router:
- receiving the request,
- identifying a first block from the referencing array according to a first signature of a first subset of ordered components from the requested content name,
- looking up in the first block for a second signature of a second subset of ordered components from requested content name, then,
- if the second signature of the second subset is referenced in the first block, checking if said second subset is matching a content name from the routing table, then,
- if said second subset is matching a content name from the routing table, forwarding the request through the forwarding interface being associated with said matching content name.

Thus, thanks to these features, the method enables the content router to initialize the referencing array with signatures associated with content name, and then to identify a subpart of said referencing array for finding a matching known content name with the received request. The method advantageously permits the content router to perform a lookup in a reduced fraction of said referring array instead of the whole referencing array or the full routing table RT. The method allows then the content router to forward efficiently the request comprising the requested content name. The method advantageously allows the content router to manage efficiently very high number of content names stored in very large forward information base. The method ensures an efficient forwarding by initializing advantageously the referencing array, performing a fast lookup in an identified block from the referencing array and checking the relevance of a matching content name. The method guarantees then that the selected forward information for forwarding of the request is found with low latency and is the most relevant match known by said content router.

According to various embodiments, such method comprises one or more of the features below, which should be considered in any possible technical combinations:
- the step of looking up is performed iteratively with variants of the second subset of the requested content name,
- an initial variant of the second subset is the requested content name, and the step of looking up is performed iteratively from the longest to the shortest variants second subsets,
- the method further comprises a step of forwarding the request to a default forwarding interface if the first block is not referencing the second signatures of the variants of the second subsets,
- the signatures of the first plurality of content names, the first signature of the first subset, and the second signature of the second subset are determined from at least one hash function applied respectively on the first plurality of content names, the first subset and the second subset,
- the at least one hash function is a function selected from the group consisting of "CRC" hash function, "checksum" hash function, and "Fowler-Noll-Vo" hash function,
- the referencing array is a "Prefix Bloom filter",
- the step of identifying identifies a second block from the referencing array according to an expansion indicator comprised in the first block, and the steps of looking up is performed in the second block according to said expansion indicator,
- each content name from the first plurality of content name is a set of ordered components, and the step of initializing the referencing array further comprises the following steps:
   ∘ selecting the first block according to a root signature of a root subset of ordered components from a content name from the first plurality of content name,
   ∘ initializing the first block with signatures of a second plurality of content names comprised in the first plurality of content names, each content name from said second plurality of content names sharing the same root subset,
- the step of initializing the referencing array further comprises the following steps:
   ∘ if the number of signatures of the second plurality of content names for initializing the first block is greater than an expansion threshold, identifying a third plurality of content names from the second plurality of content names according to an expansion criteria,
   ∘ selecting the second block from the referencing array according to a signature of a chosen subset of ordered components from a content name from the third plurality of content names, said chosen subset being selected according to the expansion criteria.
   ∘ moving, from the first block to the second block, the signatures of a fourth plurality of content names comprised in the third plurality of content names, said fourth plurality of content names comprising content names sharing the chosen subset,
- the expansion threshold is determined from a false positive probability target associated with the first block,
- the expansion criteria is a criteria on the number of components from the set of ordered components from the content names of the second plurality of content names,
- the expansion indicator is set during the step of moving the signatures of the fourth plurality of content names from the first block to the second block.

Thus, thanks to the features of selecting and of initializing the first block, and the features of identifying a third plurality, of selecting and of initializing the second block , the method enables the content router to manage the referencing array into said first block and said second block, which allows performing an efficient lookup of the requested content name. The method enables the content router to perform fast search through variant signatures of requested content name into the first block or the second block that are selected fractions of the referencing array.

The expansion threshold and the false positive probability target enable the method to tune the initialization of the referencing array.

A second aspect of the invention relates then to a content router in a network for forwarding a request comprising a requested content name being a set of ordered components, said content router comprising a routing table and a first plurality of content names and a plurality of forwarding interfaces, said routing table associating each content name from the first plurality of content names to at least one forwarding interface from the plurality of forwarding interfaces, said content router comprising:
- an initialization module for initializing a referencing array with signatures of the first plurality of content names, each signature being a representation of at least one content name,
- an identification module for identifying a first block from the referencing array according to a first signature of a first subset of ordered components from the requested content name,
- a looking up module for looking up in the first block for a second signature of a second subset of ordered components from requested content name,
- a checking module for comparing said second subset with a content name from the routing table.

Thus, thanks to these features, the content router is enabled to efficiently forward request comprising a requested content name. The content router is able to manage large forward information base with high number of content names. The features of the content router are advantageous for initializing the referencing array that comprises signatures of the content names, and to process said referencing array for looking up the requested content name. The modules from the content router allows increase the speed of lookup and then to enable the content router to sustain high throughput of content.

According to an embodiment, the initialization module is further adapted to size the number of elements of the first block to the number of elements of a cache memory block from a memory comprised in the first content router, said memory comprising a plurality of cache memory blocks. Thanks to this feature, the content router is adapted to initialize the referencing array according to its hardware constraints.

### BRIEF DESCRIPTION OF THE FIGURES

Some embodiments of the present invention are now described, by way of example only, and with reference to the accompanying drawings, in which:
- FIG. 1 is a schematic block diagram of a communication network comprising an embodiment of a content router for forwarding a request for content,
- FIG. 2 is a schematic block diagram of an embodiment of a content router for forwarding a request for content,
- FIG. 3a is a schematic block diagram of an embodiment of a request for content,
- FIG. 3b is a schematic block diagram of an embodiment of signatures of subsets of a requested content name,
- FIG. 4a is a schematic block diagram of an embodiment of a first content name,
- FIG. 4b is a schematic block diagram of an embodiment of a second content name,
- FIG. 4c is a schematic block diagram of an embodiment of a third content name,
- FIG. 4d is a schematic block diagram of an embodiment of a fourth content name,
- FIG. 4e is a schematic block diagram of an embodiment of a fifth content name,
- FIG. 5 is a block diagram of an embodiment of a block from a referencing array,
- FIG. 6a is a flowchart showing steps performed in an embodiment of the method according to the invention,
- FIG. 6b is a flowchart showing initialization steps performed in an embodiment of the method according to the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims.

In the following description, well-known functions or constructions by the man skilled in the art are not described in detail since they would obscure the invention in unnecessary detail.

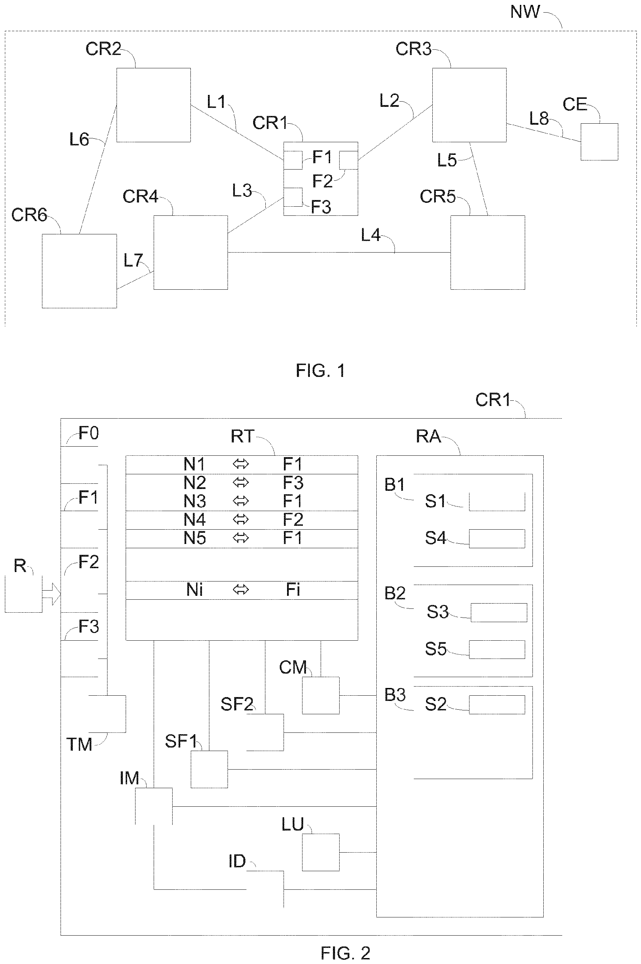

Referring to **FIG. 1****,** a schematic block diagram of a communication network comprising an embodiment of a content router for forwarding a request for content is depicted.

A communication network NW is schematized as a simplified representation of larger communication network. The communication network NW is a network for carrying content from an endpoint to another endpoint, said data belonging to control plane or data plane. In non limiting examples, the communication network NW is the Internet or a subpart thereof, or is a private network. The communication network NW may comprise a fixed access network and/or a wireless access network.

The communication network NW comprises apparatuses for delivering content and/or forwarding request for content. Such apparatuses are a first content router CR1, a second content router CR2, a third content router CR3, a fourth content router CR4, a fifth content router CR5, and a sixth content router CR6. Said content routers are routers for delivering content, forwarding request for content, or caching content. Said content routers are comprised in a content centric network architecture taking place in the communication network NW. They comprise content items and/or fragments of content items, such as audio or video media content, text files, database etc. to be delivered to an endpoint upon request. Each content router also comprises list of known content names, associated to various destination interfaces. Such list and association are built along the duration of use of the content routers that receive new content and new request for contents.

It is meant by the terms "content name" a name designating a given content item. In a non limiting example, a content name is a hierarchical name comprising human-readable components. In another non limiting example, components are not human-readable but are labeled to allow a hierarchical indexation of content names.

Content items are split in fragments, in sequence of packets identified by a content name comprising components separated by a delimiter character. An example of a hierarchical content name for a given packet from a content item is "/a/b/c/d.txt/packet1 ", wherein the delimiter character is forward slash character, characters "a", "b", "c", "d.txt" are components from the content name, and "packet1" is an arbitrary packet identifier.

Content name subsets or prefixes can be derived from combinations of the components of the full name of the content item. For example the content name "/Iaw-practice/legal-texts/html/epc/2013/e/ma1.html" designates the content item "ma1.html", and the subsets "/law-practice/legal-texts" or "/law-practice/legal-texts/html" are possible subset of the content name.

A content router such as the first content router CR1, and other content routers listed herein above, processes requests for content items designated by their respective content names. A request comprising a content name unknown by the first content router CR1 is stored and then forwarded to a default destination, usually another content router, such as the second content router CR2 or third content router CR3. While said request comprising unknown content name has been resolved by another content router, the response corresponding to this request may come back to the first content router CR1. Said first content router CR1 is then able to retrieve the route followed by this request and to associate a destination to the unknown content name. Such association on the first content router CR, is stored in a forward information base which is a database of content names with their respective destinations. The forward information base is populated by a routing protocol. In an example it is possible to complement the information stored in the forward information base with some new routes for content learnt from received requests for content and processed requests for content. For describing various embodiments of the invention, it is assumed that the forward information base is pre-populated with content names and their respective next hops.

The communication network NW further comprises:
- a first link L1 that connects the first content router CR1 with the second content router CR2,
- a second link L2 that connects the first content router CR1 to the third content router CR3,
- a third link L3 that connects the first content router CR1 to the fourth content router CR4,
- a fourth link L4 that connects the fourth content router CR4 to the fifth content router CR5,
- a fifth link L5 that connects the third content router CR3 to the fifth content router CR5
- a sixth link L6 that connects the second content router CR2 to the sixth content router CR6,
- a sixth link L6 that connects the fourth content router CR4 to the sixth content router CR6,
- a communication equipment CE connected to the third content router CR3 through an eighth link L8.

The first link L1, second link L2, third link L3, fourth link L4, fifth link L5, sixth link L6, seventh link L7 and eighth link L8 are respectively connecting content routers together, and the communication equipment CE to the mesh of the content routers such as the first content router CR1 or second content router CR2. Said links are physical connections in an example, whereas they are logical connections in another example. Said links may also involved intermediate nodes from the communication network NW, such as a gateway or an access point for the communication equipment CE, that are not depicted on figure FIG. 1.

The communication equipment CE is operated by a user, and allows him to request and consume content. In non limiting examples, the communication equipment CE is any device operable by a user and able to connect to communication networks. The communication equipment CE may be for example a smartphone, or a personal computer, or a tablet. In a non limiting example not depicted on figure FIG. 1, the eighth link L8 further comprises a network access medium for allowing the communication equipment CE to connect to the communication network CN.

The first content router CR1 further comprises forwarding interfaces Fi. A first forwarding interface F1 is connected to the first link L1, a second forwarding interface F2 is connected to the second link L2, and a third forwarding interface F3 is connected to third link L3. Said forwarding interfaces Fi from the first content router CR1 are means or devices for receiving and/or forwarding on the respective links messages comprising request for content items or content items.

In an example not depicted on figure FIG. 1, the first forwarding interface F1 is connected to the first link L1 and to another link connected to another content router.

In another example not depicted on figure FIG. 1, each content router such as the second content router CR2, or the third content router CR3, or the fourth content router CR4, or the fifth content router CR5, or the sixth content router CR6 respectively comprises forwarding interfaces such as the first content router CR1.

Referring to **FIG. 2****,** a schematic block diagram of an embodiment of a content router for forwarding a request for content is depicted.

In this embodiment, the first content router CR1 further comprises a first plurality of content names Ni, known from the forward information base. The first plurality of content names Ni comprises the first content name N1, the second content name N2, the third content name N3, the fourth content name N4, and the fifth content name N5. Each content name Ni designates a respective content item that is not depicted on figure FIG. 2. It is meant by content names Ni known from the forward information base, content names Ni for which the forwarding interfaces Fi are known, either from previous received requests for content item, or either from content item themselves, or either from information exchanged between forward information bases of different content routers. For example, upon a content item corresponding to the first content name N1, it is known from the first content router CR1 that the first forwarding interface F1 is to be used. In another example, for content names that are unknown from the first content router CR1, a default forwarding policy may be applied, such as forwarding the request for this unknown content name to the second router CR2.

It should be noted that for easing the presentation of the embodiments, the first plurality of content names Ni comprises only a few number of content names Ni, in the context of the simplified communication network NW. In practical case of a real communication network, a content router such as the first content router CR1 may comprise millions of content names and should be able to process in real-time with low latency a request for a content item designated by its content name.

The first content router CR1 further comprises a routing table RT. Said routing table RT associates each of the content names Ni to at least one of the forwarding interfaces Fi. In non limiting examples the routing table comprises associations wherein a forwarding interface Fi is associated with several content names Ni:
- the first content name N1 with the first forwarding interface F1,
- the second content name N2 with the third forwarding interface F3,
- the third content name N3 with the first forwarding interface F1,
- the fourth content name N4 with the second forwarding interface F2,
- the fifth content name N5 with the first forwarding interface F1.

In an example, the routing table RT comprises content names associated to more than one forwarding interface Fi, then allowing multi-forwarding of request for content.

The first content router CR1 further comprises a referencing array RA. The referencing array RA is an indexing mean allowing to efficiently looking up for the presence and/or the absence of elements. Said elements are signatures Si associated to each of the known content names from the first plurality of content names Ni. It is meant by efficient lookup, a lookup that does not require performing an extensive search on a large table such as the forward information base or the routing table. The structure of the referencing array RA and the properties of the signatures Si allow performing lookup for a given content name more quickly than by looking up directly in the routing table.

The signatures Si are identifiers associated to the first plurality of content names Ni:
- the first content name N1 is associated with the first signature S1,
- the second content name N2 is associated with the second signature S2,
- the third content name N3 is associated with the third signature S3,
- the fourth content name N4 is associated with the fourth signature S4,
- the fifth content name N5 is associated with the fifth signature S5,

In an embodiment, a signature such as the first signature S1 is a compact representation of a content name from the first plurality of content names Ni. A compact representation of a content name is shorter than said content name. A possible property of such compact representation is the fixed length of a signature compared to the varying length of content names Ni from the first plurality of content names Ni. In examples, a signature may be an identifier such as a numerical value, or a label such as a string or a memory address location.

For efficiency purpose, it shall be noted that the referencing array RA should preferably comprise less elements than the number of content names Ni from the first plurality of content names Ni. Therefore it is possible that two different content names Ni have the same signature within the referencing array RA.

In a preferred embodiment, the referencing array RA comprises a first block B1, a second block B2 and a third block B3. Said blocks are subdivisions of the referencing array RA, each block comprising elements of said referencing array RA. The first block B1, the second block B2 and the third block B3 are characterized by their respective length. In an example, said blocks have the same length. In another example, the referencing array RA comprises more than three blocks.

The first content router CR1 further comprises signatures functions SFi such as a first signature function SF1. Said first signature function SF1 is a function to determine signatures Si associated to content names from the first plurality. The first signature function SF1 processes the first content name N1 to determine the first signature S1, in an example.

In an embodiment, the first content router CR1 further comprises a second signature function SF2. Said second signature SF2 is also a function to determine signatures Si associated to content names from the first plurality.

In a preferred embodiment, the first signature function SF1 and the second signature function SF2 are combined to determine the signatures Si. In an example, the first signature function S1 determines a first part from the first signature S1 according to the first content name N1, and the second signature function S2 determines a second part from the first signature S1 according to the first content name N1. The first part and second part are then combined into the first signature S1.

In a preferred embodiment, the first signature function SF1 and the second signature function SF2 are hash functions. A hash function may be in an example a Cyclic Redundancy Check "CRC" hash function. In other examples, a hash function may be a "checksum" hash function, or a "Fowler-Noll-Vo" hash function, or a "MurmurHash" hash function.

In an example, the first signature function SF1 processes the first content name N1 resulting in a first value corresponding to an element of the referencing array RA, and the second signature function SF2 process the first content name N1 resulting in a second value corresponding to another element of the referencing array RA. The signature S1 from the first content name N1 is then referenced in the reference array RA by the combination of said elements.

The first content router CR1 is able to receive a request R for a content item through one of its forwarding interfaces Fi such as the second forwarding interface F2. Said request R is to be processed by the first content router CR1, and may be then forwarded through the appropriate forwarding interface Fi in case the content item is known from the first content router CR1, or may be forwarded to a default forwarding interface F0 in case the content item is unknown from said first content router CR1.

The first content router CR1 comprises a transceiver module TM. Said transceiver module TM is adapted to cooperate with the forwarding interface Fi from the first content router CR1, and with other modules comprised in the first content router CR1.

The first content router CR1 also comprises an initialization module IM. In an embodiment the initialization module IM is able to cooperate with the routing table RT and the referencing array RA. In an example said initialization module IM is a software service from the first content router CR1 or is a combination of a hardware processing device and a software service. In an embodiment said initialization module IM is adapted to arrange the referencing array RA according to the hardware constraints of the first content router CR1.

The first content router CR1 also comprises an identification module ID.In an embodiment the identification module ID is adapted to cooperate with the referencing array RA. It comprises means for identifying the first block B1, the second block B2 and the third block B3 from said referencing array RA. The identification module IM is also adapted to identify set of content names Ni with specific properties from the first plurality of content names Ni. The identification module ID is also able to cooperate with the initialization module IM for initializing the referencing array RA. Said identification module ID is a software service from the first content router CR1, said software service being able to cooperate with the referencing array RA.

The first content router CR1 also comprises a looking up module LU. The lookup module LU is adapted to cooperate with the referencing array RA. It is able to perform search on said array or fraction of array. It comprises also means to use the requested content name RN and subset of said requested content name RN for performing lookups in the referencing array RA Such looking up module LU may be a dedicated hardware coprocessor in an example, or preferably a software service hosted on a processor from the first content router CR1.

The first content couter CR1 comprises a checking module CM. The checking module CM comprises means to cooperate with the routing table RT and the referencing array RA. In an example the checking module CM is an independent software service comprised in the first content router CR1. In another example, the checking module CM is combined with other modules from the first content router CR1.

In an example, the initialization module IM, the looking up module LU, the identification module ID, the checking module CM are combined into a software service executed by a processor from the first content router CR1. In another example, said modules are distributed amongst the various processing entities from the first content router CR1.

Similarly to the first content router CR1, and not depicted on figure FIG. 2, the second content router CR2, the third content router CR3, the fourth content router CR4, the fifth content router CR5, the sixth content router CR6 may also comprises each forwarding interfaces, a routing table, a referencing array and signatures functions and modules such as an initialization module, an identification module, a checking module, a looking up module, a transceiver module and hashing functions.

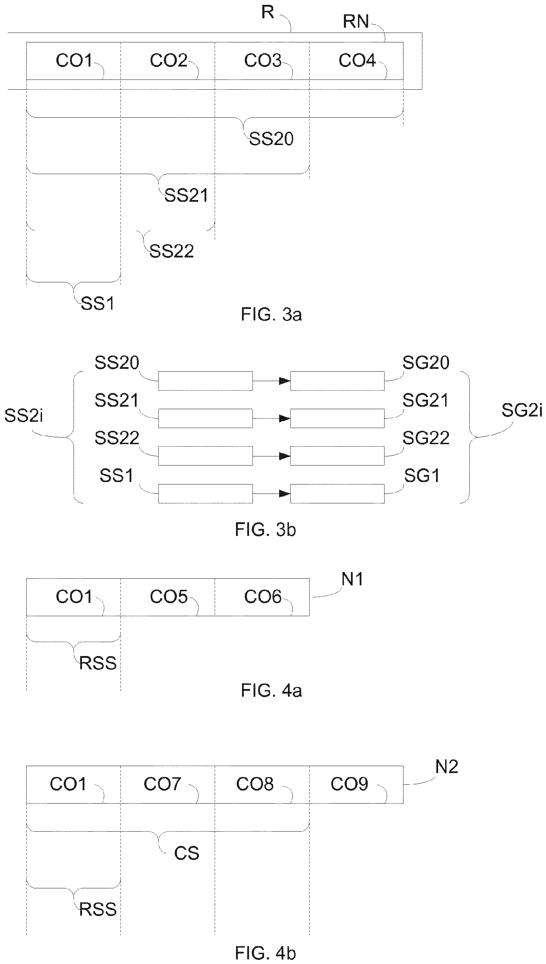

Referring to figure **FIG. 3a****,** a schematic block diagram of an embodiment of a request for content is depicted.

The request R for content designates a requested content item through a requested content name RN.

The requested content name RN is based on a hierarchical name-based scheme. A set of ordered components COi defines the hierarchical aspect of the requested content name RN. A component from the set of ordered components COi is an element designating a part of the hierarchy used for the requested content name RN. In an example of Content Centric Network, a component from said set is a string of variable length, separated from other components with a delimiter character. The hierarchical name-based scheme implies that the set of components COi is ordered, as the components COi designate the requested content name RN in a specific order whereas another ordering may corresponds to another content name.

In an example, the components COi from the requested content name RN are a first component CO1, a second component CO2, a third component CO3, and a fourth component CO4.

Various subsets of ordered components can be extracted from the requested content name RN and its set of ordered components COi:
- a first subset SS1, comprising a single component, the first component CO1
- a plurality of second subset SS2i, each second subset SS2i being a variant subset from the set of ordered components COi. Said plurality of second subset SS2i comprises the other possible variant subsets of ordered components names COi:
   ∘ the second subset SS20 is a subset that comprises all the components from the set of ordered components COi from the requested content name RN,
   ∘ the second subset SS21 is a subset comprising the first component CO1, the second component CO2, and the third component CO3,
   ∘ the second subset SS22 is a subset comprising the first component CO1 and the second component CO2.

Referring to figure **FIG .3b****,** a schematic block diagram of an embodiment of signatures of subsets of a requested content name is depicted.

The subset of ordered components from the requested content name RN and their associated signatures are depicted.

The first subset SS1 is associated with a first signature SG1. The plurality of second subset SS2i is associated with a plurality of second signatures SG2i. The variant second subset SS20 is associated with the second signature SG20, the variant second subset SS21 is associated with the second signature SG21, and the variant second subset SS22 is associated with the second signature SG22. Said second signatures SG2i and first signature SG1 are determined according to the first signature function SF1 and the second signature function SF2.

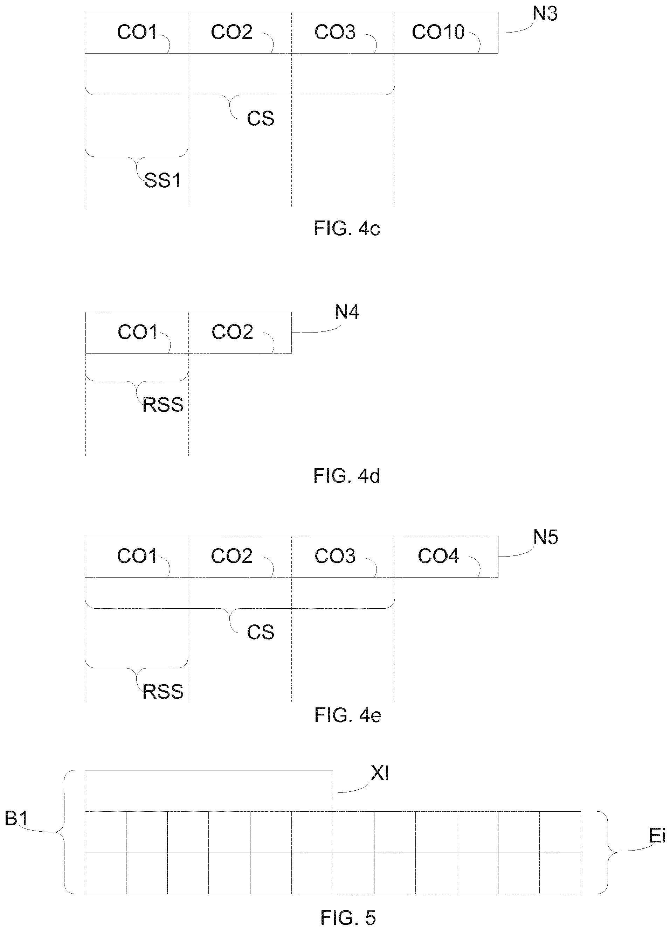

Referring to figures **FIG. 4a, FIG. 4b****,** **FIG. 4c, FIG. 4d** and **FIG. 4e****,** block diagrams of the first content name N1, the second content name N2, the third content name N3, the fourth content name N4, a fifth content name N5 are depicted.

Similarly to the requested content Name RN, each of the content name from the first plurality of content name CNi is a set of ordered components COj. It should be noted that the sets of ordered components COj may have no commonalities with the set of ordered components COi from the requested content name RN in an example. In another example the sets of ordered components COj are sharing common component names with the set of ordered components COi. For the presentation of embodiments of the invention, the sets of ordered components COj and the set of ordered components COi share some content names.

The set of ordered components COj from the first content name N1 comprises the first component CO1, the fifth component CO5 and a sixth component CO6.

The set of ordered components COj from the second content name N2 comprises the first component CO1, a seventh component CO7, a eight component CO8 and a ninth component CO9.

The set of ordered components COj from the third content name N3 comprises a first component CO1, the second component CO2, the third component CO3 and a tenth component CO10.

The set of ordered components COj from the fourth content name N4 comprises the first component CO1 and the second component CO2.

The set of ordered components COj from the fifth content name N5 comprises the first component CO1, the second content name CO2, the third content name CO3, and the fourth content name CO4.

Some of the content names from the first plurality of content names Ni may share common components. In an example wherein content items are popular multimedia content, it is likely that such content items share the same sources of content, and that their content names are sharing similar hierarchical structures. A root subset RSS may then be defined as a subset of ordered components COj shared between content names of a second plurality of content names Ni, which is comprised in the first plurality of content names Ni. The shared components COj are in the same positions for each content name from the second plurality of content names Ni. In an example, the first content name N1, the second content name N2, the third content name N3, the fourth content name N4 and the fifth content name N5 are starting with the first component CO1 which is then the root subset RSS, and said content names are then comprised in the second plurality of content names Ni. Not depicted in the figures, another content name may start with another component which is not the first component CO1. Said other content name is then not comprised in this particular second plurality of content names Ni. However it may belong to another second plurality of content names Ni that comprises other content names starting with the same other component.

A third plurality of content names Ni is comprised in the second plurality of content names Ni. The content names of said third plurality of content names Ni are identified according to an expansion criteria.

In a first example, the expansion criteria is a criteria on the number of components from each content names from the second plurality of content names Ni. The third plurality of content names Ni may be then all the content names from the second plurality for which the number of components is greater than the expansion criteria.

In a second example, the expansion criteria is also a criteria on the number of components from each content name. The content names identified in the third plurality of content names have the same number of components, said number being the most represented in the second plurality of content names Ni. In an example, if the second plurality comprises one thousand of content names with each fifty components, and comprises also two thousand of content names with each ten components, these later content names would be identified as belonging to the third plurality of content names Ni.

In yet another example, the expansion criteria is a criteria on the highest stride amongst the second plurality of content names Ni. A content name with the highest stride is a content name which is itself a shared subset with other content names, said shared subset being the longest possible in terms of number of components. The content names from the third plurality of content names Ni may then have in common the identified content name with the highest stride.

A fourth plurality of content names Ni is comprised in the third plurality of content names Ni. The content names comprised in said fourth plurality are identified according to a chosen subset CS of component names COj. Said chosen subset CS is selected according to the expansion criteria.

In the first and second examples from herein above, wherein the expansion criteria is a criteria on the number of components, the chosen subset CS is selected according to the number of components. The content names of the fourth plurality are the content names sharing the chosen subset CS.

In the example wherein the highest stride amongst the second plurality is considered, the chosen subset is the said highest stride. The content names of the fourth plurality are then content names comprising the chosen subset CS.

The identification module IM comprises means for extracting from the first plurality of content names Ni, the second plurality of content names Ni. Said identification module IM is also adapted to identify the content names comprised in the respective third plurality of content names Ni and fourth plurality of content names Ni.

An expansion threshold is defined for the first block B1. The expansion threshold is relative to the number of signatures used to initialize said first block B1. While the first block B1 is being filled with signatures of the second plurality of content names Ni, if number of said signatures exceeds the expansion threshold, steps are taken to offload the first block B1 to other blocks from the referencing array RA.

In a preferred embodiment, the expansion threshold is determined from a false positive probability target associated with the first block B1. The false positive probability target reflects the possible collision of signatures within said first block B1. Collision of signatures may happen when several content names share the same signature, as the referencing array may comprise for efficiency purpose fewer elements than the number of content names from the first plurality of content names Ni. Upon a lookup to check if a signature is referenced in the first block B1, if a match is found, the false positive probability target indicates that said match may be incorrect. In an example, the false positive probability target is one percent in order to optimize the ratio between the numbers of signatures defined by the expansion threshold and the possibility of a false positive lookup result. In an example, from a performance perspective, it is interesting to be able to tune the expansion threshold according to the false positive probability target, said false positive probability target could be adjusted depending on the constraint of the network NW or the design of the first content router CR1, or the kind of content to be managed by said first content router CR1.

Referring to figure FIG. 5, an embodiment of a block diagram of a block from a referencing array is depicted.

In this embodiment the first block B1 comprises elements Ei for referencing the signatures Si from the content names Ni. In an example each element Ei is a bit or is a tuple of bits representing a numerical value. In other example, elements Ei are structured elements, each element comprising information related to the signatures they respectively reference.

In an embodiment, the first block B1 is sized by the initialization module IM. Said sizing is set according to the length or number of memory elements of a cache memory block or line of a processor from the first content router CR1. Said processor comprises multiple cache memory blocks gathered in a fast access memory. The processor is able then to quickly access to elements Ei from the first block B1 by reading and/or writing in one of its cache memory block. Said quick accesses are advantageous for the modules from the first content router CR1 such as the looking up module LU, the checking module CM etc.

The first block B1 also comprises an expansion indicator XI. Said expansion indicator indicates if the second block B2 is to be used while processing the request R and its requested content name RN. In an example, the expansion indicator XI is a header of the first block B1. In a preferred embodiment, the expansion indicator XI is a one dimensional array of bits, each bit of the array corresponding to a length of content names Ni. For example the first bit of the expansion indicator XI corresponds to content names Ni of one component, the second bit of the expansion indicator XI corresponds to content names Ni of two components, etc. A bit set according to a predetermined convention, like 'one' value or 'TRUE' value may indicate then that for the corresponding length, the second block B2 has to be used for processing the requested content name RN.

In another embodiment, the expansion indicator XI is a two dimensional array of bits, each column of the array corresponding to another block, such as the second block B2 or the third block B3, and each line of the array corresponding to the expansion criteria. For example each line may correspond to a given length of the highest stride amongst the second plurality of content names Ni. In another example, each line may correspond to a given number of components that is used as the expansion criteria.

The expansion indicator XI allows performing a more efficient lookup by performing it at first on the second block B2, and then on the first blocking B1 if needed.

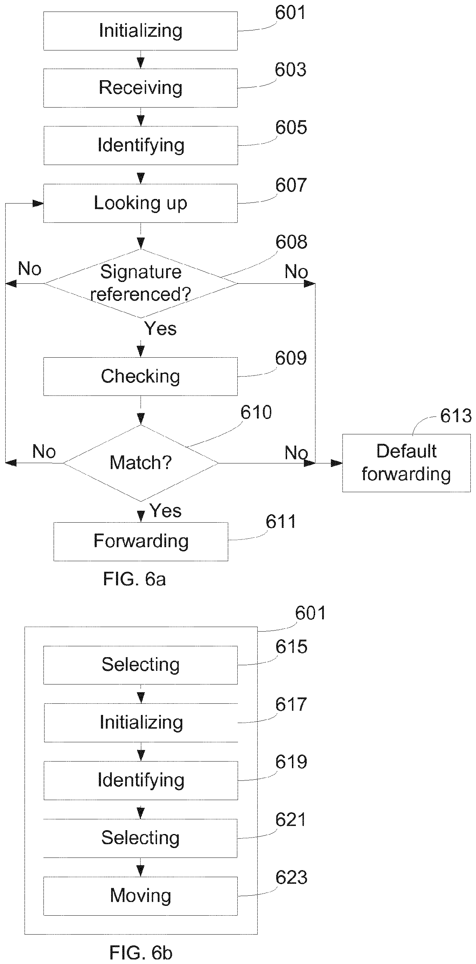

Referring to figure FIG. 6, a flowchart showing steps performed in an embodiment of the method according to the invention is depicted.

The following steps are performed by the first content router CR1.

**Step 601:** The referencing array RA is initialized with signatures Si, each signature being a representation of a content name from the first plurality of content names Ni. The initialization step is performed by the initialization module IM comprised in the first content router CR1.

**Step 603:** The first content router CR1 receives the request R, comprising the requested content name RN. The first content router CR1 comprises the transceiver module TM for receiving said request R.

**Step 605:** The first block B1 is identified in the referencing array according to a first signature SG1. Said first signature SG1 is a signature of the first subset SS1 of ordered components COi from the request components name. In a preferred embodiment, the first subset SS1 comprises only a single component which is the starting component in the hierarchical structure of the requested content name RN. The step of identifying the first block B1 is performed by the identification module IM.

**Step 607:** a lookup for a second signature SG2i is performed in the first block B1. It is meant by lookup that the first block B1 is parsed for finding a signature similar to the second signature SG2i. The second signature SG2i is a signature of one of the second subset SS2i of ordered components COi from the requested content name RN. In a preferred embodiment, the lookup is performed with variants of the second subset SS2i. In an embodiment, it is performed first with the second signature SG2i of the longest second subset SS2i, and then iteratively with second signatures SG2i of shorter second subsets SS2i. In an example the lookup is performed first with the second signature SG2i of the second subset SS20. The step of looking up is performed by the looking up module LU comprised in the first content router CR1.

**Step 608:** upon the looking up from step 607, if no match is found upon this lookup with the second signature SG20 of the variant second subset SS20, it is iterated with the second signature SG21 from the second subset SS21, and then with the signature SG22 from the second subset SS22 if still not match is found. Upon the looking up step 607, if one of the second signature SG2i is referenced by the first block B1, the next step 609 is performed. If the looking up step 607 has been performed on all the second signatures SG2i of the possible variants of the second subset SS2i, then the step 613 is performed. In an example the referencing test is executed by the looking up module LU. In another example said referencing test is performed by the checking module CM.

**Step 609:** upon the lookup from step 607 and referencing test from step 608, a check is performed on the identified second subset SS2i which second signature SG2i is referenced by the first block B1 in order to find in the routing table RT a matching content name Ni from the first plurality of content names Ni. This step allows the content router CR to identify a false positive finding when several content names Ni have the same signature Si. The step of checking is performed by the checking module CM from the first content router CR1.

**Step 610:** upon the checking step 610, if a match between the identified second subset SS2i and a content name Ni from the routing table RT is found, the next step 611 is performed. If no match is found, if variants second subsets SS2i have yet to be looked up, the step of looking up 607 is performed with remaining variants signatures SG2i of said variants second subsets SS2i. If all the variants second subsets SS2i have been looked up, and no match is found either in the first block B1 or no match is found in the routing table, the step 613 is then performed.

**Step 611:** if the identified second subset SS2i is matching a content name Ni from the routing table RT, the forwarding interface Fi associated to the matching content name Ni is used to forward the request R. The step of forwarding is performed by the transceiver module TM from the first content router CR1.

**Step 613:** in the case the first block B1 does not reference any of the variants of the second subset SS2i of the ordered components COi from the request content name RN, a default interface F0 is used to forward the request R. Such a case may happen upon a request with an unknown content name. For example, if no appropriate content name from the first plurality of content names Ni matches the requested content name RN, or subset of said requested content name, the first content router CR1 may forward the request R through the default forwarding interface F0 connected to the second content router CR2. The step of default forwarding is performed by the transceiver module TM from the first content router CR1.

Referring to figure FIG. 6b, a flowchart showing initialization steps performed in an embodiment of the method according to the invention is depicted. In this embodiment, the initialization step 601 comprises the following steps.

**Step 615:** a root signature RS is used to select the first block B1. Said root signature RS is associated with the root subset RSS of ordered components COj from one of the content name Ni of the first plurality of content names Ni. In a preferred embodiment, the root subset RSS comprises the component in the first position of the set of ordered components of said content name. In an example, the first block B1 is being selected with the root signature RS of root subset RSS that comprises the first component C01.

In an example, it is meant by selecting the first block B1 according to the root signature, and more generally by selecting a block according to a signature, that each block such as the first block B1 from the referencing array RA are identified by an identifier that can corresponds to a signature or a portion of a signature. In case signatures are tuple of numerical values, a rule may be to consider the first numerical value from the tuple as the identifier for selecting a block from the referencing array RA.

**Step 617:** the first block B1 is initialized with the signatures Si from the content names Ni from the second plurality of content names Ni. Said second plurality comprising the content names sharing the root subset RSS.

In an example, the first block B1 is being initialized with the signatures Si of the second plurality of content names that comprises the first content name N1, the second content name N2, the third content name N3, the fourth content name N4 and the fifth content name N5, that all share the component C01 as the root subset RSS.

In yet another embodiment, the initialization step 601 comprises the following steps.

**Step 619:** while initializing the first block B1 with the signatures Si from the second plurality of content names Ni, if the number of used signatures Si is greater than the expansion threshold, the third plurality of content names Ni is identified according to the expansion criteria.

In an example, the expansion threshold defines that the first block B1 allows only to reference two signatures, in order to guarantee the appropriate false positive probability target. Since there are more than two signatures, the third plurality of content names Ni is identified according to the expansion criteria. In the present example said expansion criteria is on the number of components of the content names which should less or equal than four. The third plurality of content names Ni comprises then the second content name N2, the third content name N3 and the fifth content name N5. It should be noted that this example is simplified for its presentation, and that a block such as the first block B1 may reference millions of signatures in a real life scenario and that the magnitude of the expansion threshold is set accordingly to ensure the false positive probability target.

**Step 621:** the second block B2 is selected according to a signature from the chosen subset CS from one of the content name from said third plurality of content names Ni.

In an example the chosen subset is chosen according to the expansion criteria. In this case, the chosen subset is a subset of ordered components COj of length of three components, as this specific length equals the signatures Si of the content names that will remain on the first block B1. Two different chosen subsets may be identified:
- in a first example, the chosen subset comprises the first component CO1, the second component CO2 and the third component CO3, said chosen subset CS being associated with a signature that selects the second block B2.
- In a second example, the chosen subset comprises the first component CO1, the seventh component CO7, the eighth component CO8 and the ninth component CO9, said chosen subset being associated with a signature that selects the third block B3.

**Step 623:** the fourth plurality of content names Ni is identified from the third plurality of content names Ni. Said fourth plurality of content names Ni comprises the content names Ni sharing the chosen subset CS of ordered components COj. The signatures of content names from said fourth plurality are moved from the first block B1 to the second block B2. It is meant by the terms "moving signatures", that the elements Ei specific to the identified signatures within the first block B1 are initialized to their default value or set to other values, and that the second block B2 is initialized with said identified signatures.

It should be noted that others fourth plurality of content names may be identified as there are multiple possible chosen subset CS according to the content names comprises in the third plurality of content names.

In an embodiment, the selecting step 621 is performed on the third block B3 according to the signature of the chosen subset from another content name.

In an embodiment, the expansion indicator XI from the first block B1 is set to indicate that some signatures were moved from the first block B1 to the second block B2. In an example, the expansion indicator XI advantageously indicates that content names concerned by the expansion criteria were moved from the first block B1.

In an example, the fourth plurality of content names Ni is identified based on the chosen subset CS. The third content name N3 and the fifth content name N5 are comprised in the fourth plurality of content names Ni since they share the chosen subset CS of ordered components, said chosen subset CS comprising the first component CO1, the second component CO2 and the third component CO3. The second block B2, which is identified according to the signature of the chosen subset CS, is then initialized with the third signature S3 from the third content name N3 and with the fifth signature S5 from the fifth content name N5, by moving said third S3 and fifth S5 signatures from the first block B1 to the second block B2. In another example, the first block B1 comprises a header, in which the expansion indicator XI is set to indicate that the second block B2 references now signatures Si that were previously referenced by the first block B1.

In another example the fourth plurality of content names Ni comprises the second content name N2 which chosen subset CS comprises the first component CO1, the seventh component CO7, and the eighth component CO8. Said chosen subset CS is associated with a signature designating the third block B3. The second signature S2 from the second content name N2 is then moved from the first block B1 to the third block B3. In another example, the header from the first block B1 is updated so that the expansion indicator XI indicates that the third block B3 references now signatures Si that were previously referenced by the first block B1.

In yet another example, once the content router receives de request R (step 603), the first block B1 is identified (step 605) according to the first signature SG1 of the first subset SS1 of ordered components. In this case the first subset SS1 comprises the first component CO1. Alternatively, the header of the first block B1 is checked and indicates that the second block B2 has been used to referenced signatures Si previously referenced by the first block B1. It is applicable for the requested content name RN since it comprises four components which correspond to the expansion criteria. The second block B2 is then selected according to the expansion indicator XI, or alternatively according to the signature of a subset from the requested content name RN, said subset comprising the three first components of said requested content name RN. The second block B2 is then used for looking up (step 607) for the signatures SG2i of the variants second subsets SS2i of the requested content name RN. The third signature S3 of the third content name N3 does not match signature SG2i from the longest variant from the second subset SS2i from the request content name RN. However the fifth signature S5 from the fifth content name N5 matches signature SG2i from the longest variant from the second subset SS20. The fifth content name N5 is then retrieved from the routing table for checking (step 609) that its matches the requested content name RN, in order to avoid a false positive result. In the present case, the requested content name RN and the fifth content name N5 are matching since they comprise each the same components and in the same order. The request R is then forwarded through the forwarding interface F1 to the second content router CR2.

Such steps are performed from a content router to a next hop content router until the request R reaches its destination wherein the requested content item is available.

In yet another example, another request R with requested content name RN comprising the first component CO1, the second component CO2 and the third component CO3, is received by the content router CR. In the identifying step 605, the first block B1 is selected according to the first signature SG1 from the first subset SS1 comprising the first component CO1 of said other requested content name RN. Since the number of components of said other requested content name RN is below the expansion criteria, the expansion indicator XI from the first block B1 indicates that no other blocks from the referencing array RA should be considered. The looking up step 607 is performed with second signature SG2i from the longest variant of the second subset SS2i. Since no match is found, another second signature SG2i from another variant from the second subset SS2i is considered for the looking up step 607, said variant comprising the first component CO1 and the second component CO2. A match is found with the fourth signature S4 from the fourth content name N4. The checking step 609 is then performed to compare the fourth content name N4 from the routing table RT with the current variant of the second subset SS2i for which a match is found. Since the components and their orders are matching, the received request R is forwarded through the second interface F2 associated with the fourth content name N4.

In an embodiment, the routing table RT is comprised in the forward information base from the first content router CR1. In an example, the forwarding information base comprises tenth of millions of content names that are labeled as prefix names.

The referencing array RA is a Prefix Bloom filter. The Prefix Bloom filter is partitioned into blocks such as the first block B1, second block B2 and the third block B3, said blocks being indexed within the Bloom filter by signatures or portion of signatures of the first plurality of content names Ni. The length of the Prefix Bloom filter depends on the constraints of the network NW and the capabilities of the content routers such as the first content router CR1. In an example, Prefix Bloom filter may comprise up to millions elements for referencing signatures. Each block is composed of array of consecutive bits or array of numerical values such as a counting Bloom filter, in which signatures associated with prefix names may be referenced.

The blocks from the Prefix Bloom filter are sized to fit in a cache line or block of a fast memory collaborating with a generic purpose processor or a network processor. It is advantageous to consider processing constraints such as size of a cache memory block for tailoring the blocks from the referencing array RA as it allows to efficiently load into the cache line a full block, and to perform fast lookup. The method allows flexibility to the first content router CR1 to be adapted to its hardware constraints, in order to benefit from smart fast memory access.

The expansion indicator XI from the first block B1 allows also indicating that an additional block such as the second block B2 is to be loaded in the cache memory block, and it saves the time needed to do lookup in the first block B1. It speeds up the search for the requested content name RN, and then allows the first content router CR1 to achieve higher throughput of content.

The signatures for the content names Ni or the requested content name RN are obtained from hash functions. The hash functions used for generating said signatures are advantageously chosen for optimizing the repartition of initialized elements in the blocks from the referencing array. For example the first signature function SF1 and the second signature function SF2 are "CRC" hash functions, that allows to determine signatures efficiently on multi-core processing devices. Advantageously said first SF1 and second SF2 signatures functions are combined with "exclusive or XOR" operator for minimizing the signatures computation time but still guaranteeing an optimized repartition of initialized elements.

In an embodiment a longest prefix matching method is used for lookup of prefix names in the forwarding information table. Advantageously, the initializing step of the invention allows distributing efficiently signatures of known content names amongst the blocks from the referencing array. Moreover the initializing step combined with identifying step 605, the looking up step 607 and the checking step 609 enables to perform more efficiently the longest prefix matching method. Indeed such methods benefits from the distribution of the signatures amongst the blocks of the referencing array that can be loaded in a fast access cache memory. The method from the present invention allows in some cases to reduce the number of memory access compared to other longest prefix matching adaptation. Advantageously in some other cases, only a single memory access is required for looking up into an identified block from the referencing array RA.

Another advantage of the present invention is to perform efficiently lookup of prefix names into forwarding information base on different kind of computational hardware. The steps of the method are adapted to fit general purpose processors or network processors that are widely used in content routers and communication equipments. For example the steps of the method allowing a fast identification of a block to be loaded into a cache memory block, and the looking up process are tailored to maximize the performance of a general purpose processors or network processors.

In an example, the invention provides an increased forwarding request processing capabilities compared to previous techniques. It allows the content routers to sustain throughput of request for content and data throughput that are higher in the magnitude of twenty percent to thirty percent in case a match is found into the routing table, and higher in the magnitude of thirty percent to forty percent in case no match is found in the routing table.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for a content router (CR1) in a network (NW) for forwarding a request (R) comprising a requested content name (RN) being a set of ordered components (COi), said content router (CR1) comprising a routing table (RT) and a first plurality of content names (Ni) and a plurality of forwarding interfaces (Fi), said routing table (RT) associating each content name (Ni) from the first plurality of content names (Ni) to at least one forwarding interface (Fi) from the plurality of forwarding interfaces (Fi), said method comprising the following initialization step performed by the content router (CR1):
- initializing (601) a referencing array (RA) with signatures (Si) of the first plurality of content names (Ni), each signature (Si) being a representation of at least one content name (Ni),
and said method comprising the following steps performed in real-time by the content router (CR1):
- receiving (603) the request (R),
- identifying (605) a first block (B1) from the referencing array (RA) according to a first signature (SG1) of a first subset (SS1) of ordered components (COi) from the requested content name (RN),
- looking up (607) in the first block (B1) for a second signature (SG2i) of a second subset (SS2i) of ordered components (COi) from the requested content name (RN), then,
- if the second signature (SG2i) of the second subset (SS2i) is referenced (608) in the first block (B1), checking (609) if said second subset (SS2i) is matching a content name (Ni) from the routing table (RT), then,
- if said second subset (SS2i) is matching (610) a content name (RNi) from a the routing table (RT), forwarding (611) the request (R) through a forwarding interface (Fi) being associated with said matching content name (Ni).

2. A method according to claim 1, wherein the step of looking up (607) is performed iteratively with variants of the second subset (SS2i) of the requested content name (RN).

3. A method according to claim 2, wherein an initial variant of the second subset (SS20) is the requested content name (RN), and the step of looking up (607) is performed iteratively from the longest to the shortest variants of the second subset (SS2i).

4. A method according to any of the claims 2 to 3 further comprising a step of forwarding (613) the request (R) to a default forwarding interface (F0) if the first block (B1) is not referencing the second signatures (SG2i) of the variants of the second subsets (SS2i).

5. A method according to any of the claims 1 to 4, wherein the signatures (Si) of the first plurality of content names (Ni), the first signature (SG1) of the first subset (SS1), and the second signature (SG2i) of the second subset (SS2i) are determined from at least one hash function (SFi) applied respectively on the first plurality of content names (Ni), the first subset (SS1) and the second subset (SS2i).

6. A method according to claim 5, wherein the at least one hash function (SFi) is a function selected from the group consisting of "CRC" hash function, "checksum" hash function, and "Fowler-Noll-Vo" hash function.

7. A method according to any of the claims 1 to 6, wherein the referencing array (RA) is a "Prefix Bloom filter".

8. A method according to any of the claims 1 to 7, wherein the step of identifying (605) identifies a second block (B2) from the referencing array (RA) according to an expansion indicator (XI) comprised in the first block (B1), and the steps of looking up (607) is performed in the second block (B2) according to said expansion indicator (XI).

9. A method according to any of the claims 1 to 8, wherein each content name (Ni) from the first plurality of content name (Ni) is a set of ordered components (COj), and wherein the step of initializing (601) the referencing array (RA) further comprises the following steps:
- selecting (615) the first block (B1) according to a root signature (RS) of a root subset (RSS) of ordered components (COj) from a content name (Ni) from the first plurality of content name (Ni),
- initializing (617) the first block (B1) with signatures (Si) of a second plurality of content names (Ni) comprised in the first plurality of content names (Ni), each content name (Ni) from said second plurality of content names (Ni) sharing the same root subset (RSS).

10. A method according to claim 9, wherein the step of initializing (601) the referencing array (RA) further comprises the following steps:
- if the number of signatures (Si) of the second plurality of content names (Ni) for initializing the first block (B1) is greater than an expansion threshold, identifying (619) a third plurality of content names (Ni) from the second plurality of content names (Ni) according to an expansion criteria,
- selecting (621) the second block (B2) from the referencing array (RA) according to a signature of a chosen subset (CS) of ordered components (COj) from a content name (Ni) from the third plurality of content names (Ni), said chosen subset (CS) being selected according to the expansion criteria,
- moving (623), from the first block (B1) to the second block (B2), the signatures (Si) of a fourth plurality of content names (Ni) comprised in the third plurality of content names (Ni), said fourth plurality of content names (Ni) comprising content names (Ni) sharing the chosen subset (CS).

11. A method according to claim 10, wherein the expansion threshold is determined from a false positive probability target associated with the first block (B1).

12. A method according to any of the claims 10 to 11, wherein the expansion criteria is a criteria on the number of components from the set of ordered components (COj) from the content names (Ni) of the second plurality of content names (Ni).

13. A method according to claim 8 and any of the claims 10 to 12, wherein the expansion indicator (XI) is set during the step of moving (623) the signatures (Si) of the fourth plurality of content names (N1) from the first block (B1) to the second block (B2).

14. A content router (CR1) for a network (NW) for forwarding a request (R) comprising a requested content name (RN) being a set of ordered components (COi), said content router (CR1) comprising a routing table (RT) and a first plurality of content names (Ni) and a plurality of forwarding interfaces (Fi), said routing table (RT) associating each content name (Ni) from the first plurality of content names (Ni) to at least one forwarding interface (Fi) from the plurality of forwarding interfaces (Fi), said content router (CR1) comprising:
- an initialization module (IM) for initializing a referencing array (RA) with signatures (Si) of the first plurality of content names (Ni), each signature (Si) being a representation of at least one content name (Ni),
- an identification module (ID) for identifying a first block (B1) from the referencing array (RA) according to a first signature (SG1) of a first subset (SS1) of ordered components (COi) from the requested content name (RN),
- a looking up module (LU) for looking up in the first block (B1) for a second signature (SG2i) of a second subset (SS2i) of ordered components (COi) from the requested content name (RN),
- a checking module (CM) for comparing said second subset (SS2i) with a content name (Ni) from the routing table (RT) if said second signature of the second subset is referenced in the first block, wherein, if said second subset is matching a content name from the routing table, the content router is adapted to forward the request through a forwarding interface associated with said matching content name.

15. A content router (CR1) according to claim 14, wherein the initialization module (IM) is further adapted to size the number of elements (Ei) of the first block (B1) to the number of elements of a cache memory block from a memory comprised in the first content router (CR1), said memory comprising a plurality of cache memory blocks.

## Patentansprüche

1. Verfahren für einen Content-Router (CR1) in einem Netzwerk (NW) zum Weiterleiten einer Anfrage (R), umfassend einen angefragten Content-Namen (RN), der ein Satz von angeordneten Bestandteilen (COi) ist, wobei der genannte Content-Router (CR1) eine Routingtabelle (RT) und eine erste Vielzahl von Content-Namen (Ni) und eine Vielzahl von Weiterleitungs-Schnittstellen (Fi) umfasst, wobei die genannte Routingtabelle (RT) jeden Content-Namen (Ni) von der ersten Vielzahl von Content-Namen (Ni) wenigstens einer Weiterleitungs-Schnittstelle (Fi) aus der Vielzahl von Weiterleitungs-Schnittstellen (Fi) zuordnet, wobei das genannte Verfahren den folgenden Initialisierungsschritt umfasst, der von dem Content-Router (CR1) durchgeführt ist:
- Initialisieren (601) einer Referenzierungs-Anordnung (RA) mit Signaturen (Si) der ersten Vielzahl von Content-Namen (Ni), wobei jede Signatur (Si) eine Darstellung wenigstens eines Content-Namens (Ni) ist;
und das genannte Verfahren die folgenden Schritte umfasst, die in Echtzeit von dem Content-Router (CR1) durchgeführt sind:
- Empfangen (603) der Anfrage (R),
- Identifizieren (605) eines ersten Blocks (B1) von der Referenzierungs-Anordnung (RA) gemäß einer ersten Signatur (SG1) eines ersten Teilsatzes (SS1) von angeordneten Bestandteilen (COi) von dem angefragten Content-Namen (RN),
- Nachschlagen (607) einer zweiten Signatur (SG2i) eines zweiten Teilsatzes (SS2i) von angeordneten Bestandteilen (COi) von dem angefragten Content-Namen (RN) in dem ersten Block (B1), dann
- wenn die zweite Signatur (SG2i) des zweiten Teilsatzes (SS2i) in dem ersten Block (B1) referenziert (608) ist, Überprüfen (609), ob der zweite Teilsatz (SS2i) mit einem Content-Namen (Ni) von der Routingtabelle (RT) übereinstimmt, dann,
- wenn der genannte zweite Teilsatz (SS2i) mit einem Content-Namen (RNi) von der Routingtabelle (RT) übereinstimmt, Weiterleiten (611) der Anfrage (R) durch eine Weiterleitungs-Schnittstelle (F), die dem genannten übereinstimmenden Content-Namen (Ni) zugeordnet ist.

2. Verfahren gemäß Anspruch 1, wobei der Schritt des Nachschlagens (607) iterativ mit Varianten des zweiten Teilsatzes (SS2i) des angefragten Content-Namens (RN) durchgeführt ist.

3. Verfahren gemäß Anspruch 2, wobei eine anfängliche Variante des zweiten Teilsatzes (SS20) der angefragte Content-Name (RN) ist und der Schritt des Nachschlagens (607) iterativ von den längstens bis zu den kürzesten Varianten des zweiten Teilsatzes (SS2i) durchgeführt ist.

4. Verfahren gemäß irgendeinem der Ansprüche 2 bis 3, weiterhin umfassend einen Weiterleitungsschritt (613) der Anfrage (R) an eine voreingestellte Weiterleitungs-Schnittstelle (F0), wenn der erste Block (B1) die zweiten Signaturen (SG2i) der Varianten der zweiten Teilsätze (SS2i) nicht referenziert.

5. Verfahren gemäß irgendeinem der Ansprüche 1 bis 4, wobei die Signaturen (Si) der ersten Vielzahl von Content-Namen (Ni), die erste Signatur (SG1) des ersten Teilsatzes (SS1) und die zweite Signatur (SG2i) des zweiten Teilsatzes (SS2i) von wenigstens einer Hash-Funktion (SFi) bestimmt sind, die jeweils auf die erste Vielzahl von Content-Namen (Ni), den ersten Teilsatz (S1) und den zweiten Teilsatz (SS2i) angewendet ist.

6. Verfahren gemäß Anspruch 5, wobei die wenigstens eine Hash-Funktion (SFi) eine Funktion ist, die aus der Gruppe ausgewählt ist, bestehend aus einer "CRC"-Hash-Funktion, einer "Prüfsummen"-Hash-Funktion und einer "Fowler-Noll-Vo"-Hash-Funktion.

7. Verfahren gemäß irgendeinem der Ansprüche 1 bis 6, wobei die Referenzierungs-Anordnung (RA) ein "Prefix-Bloom-Filter" ist.

8. Verfahren gemäß irgendeinem der Ansprüche 1 bis 7, wobei der Identifizierungsschritt (605) einen zweiten Block (B2) von der Referenzierungs-Anordnung (RA) gemäß einem Expansionsindikator (XI) identifiziert, der in dem ersten Block (B1) umfasst ist, und die Nachschlag-Schritte (607) in dem zweiten Block (B2) gemäß dem genannten Expansionsindikator (XI) durchgeführt sind.

9. Verfahren gemäß irgendeinem der Ansprüche 1 bis 8, wobei jeder Content-Name (Ni) von der ersten Vielzahl von Content-Namen (Ni) ein Satz von angeordneten Bestandteilen (COj) ist und wobei der Initialisierungsschritt (601) der Referenzierungs-Anordnung (RA) weiterhin die folgenden Schritte umfasst:
- Auswählen (615) des ersten Blocks (B1) gemäß einer Wurzel-Signatur (RS) eines Wurzel-Teilsatzes (RSS) von angeordneten Bestandteilen (COj) von einem Content-Namen (Ni) von der ersten Vielzahl von Content-Namen (Ni),
- Initialisieren (617) des ersten Blocks (B1) mit Signaturen (Si) einer zweiten Vielzahl von Content-Namen (Ni), die in der ersten Vielzahl von Content-Namen (Ni) umfasst sind, wobei jeder Content-Name (Ni) von der genannten zweiten Vielzahl von Content-Namen (Ni) denselben Wurzel-Teilsatz (RSS) teilt.

10. Verfahren gemäß Anspruch 9, wobei der Initialisierungsschritt (601) der Referenzierungs-Anordnung (RA) weiterhin die folgenden Schritte umfasst:
- wenn die Anzahl von Signaturen (Si) der zweiten Vielzahl von Content-Namen (Ni) zum Initialisieren des ersten Blocks (B1) größer ist als ein Expansions-Schwellenwert, Identifizieren (619) einer dritten Vielzahl von Content-Namen (Ni) von der zweiten Vielzahl von Content-Namen (Ni) gemäß einem Expansionskriterium,
- Auswählen (621) des zweiten Blocks (B2) von der Referenzierungs-Anordnung (RA) gemäß einer Signatur eines ausgewählten Teilsatzes (CS) von angeordneten Bestandteilen (COj) von einem Content-Namen (Ni) aus der Vielzahl von Content-Namen (Ni), wobei der genannte ausgewählte Teilsatz (CS) gemäß den Expansionskriterien ausgewählt ist,
- Bewegen (623) der Signaturen (Si) einer vierten Vielzahl von Content-Namen (Ni), die in der dritten Vielzahl von Content-Namen (Ni) umfasst sind, von dem ersten Block (B1) zu dem zweiten Block (B2), wobei die vierte Vielzahl von Content-Namen (Ni) Content-Namen (Ni) umfasst, die den ausgewählten Teilsatz (CS) teilen.

11. Verfahren gemäß Anspruch 10, wobei der Expansions-Schwellenwert von einem falschen positiven Wahrscheinlichkeits-Ziel bestimmt ist, das dem ersten Block (B1) zugeordnet ist.

12. Verfahren gemäß irgendeinem der Ansprüche 10 bis 11, wobei das Expansionskriterium ein Kriterium über die Anzahl von Bestandteilen von dem Satz von angeordneten Bestandteilen (COj) von den Content-Namen (Ni) der zweiten Vielzahl von Content-Namen (Ni) ist.

13. Verfahren gemäß Anspruch 8 und irgendeinem der Ansprüche 10 bis 12, wobei der Expansionsindikator (XI) während des Bewegungsschrittes (623) der Signaturen (Si) der vierten Vielzahl von Content-Namen (N1) von dem ersten Block (B1) zum zweiten Block (B2) eingestellt ist.

14. Content-Router (CR1) für ein Netzwerk (NW) zum Weiterleiten einer Anfrage (R), umfassend einen angefragten Content-Namen (RN), der ein Satz von angeordneten Bestandteilen (COi) ist; wobei der genannte Content-Router (CR1) eine Routingtabelle (RT) und eine erste Vielzahl von Content-Namen (Ni) und eine Vielzahl von Weiterleitungs-Schnittstellen (Fi) umfasst, wobei die genannte Routingtabelle (RT) jeden Content-Namen (Ni) aus der Vielzahl von Content-Namen (Ni) wenigstens einer Weiterleitungs-Schnittstelle (Fi) von der Vielzahl von Weiterleitungs-Schnittstellen (Fi) zuordnet, wobei der genannte Content-Router (CR1) umfasst:
- ein Initialisierungsmodul (IM) zum Initialisieren einer Referenzierungs-Anordnung (RA) mit Signaturen (Si) der ersten Vielzahl von Content-Namen (Ni), wobei jede Signatur (Si) eine Darstellung wenigstens eines Content-Namens (Ni) ist,
- ein Identifizierungsmodul (ID) zum Identifizieren eines ersten Blocks (B1) von der Referenzierungs-Anordnung (RA) gemäß einer ersten Signatur (SG1) eines ersten Teilsatzes (SS1) von angeordneten Bestandteilen (COi) von dem angeforderten Content-Namen (RN),
- ein Nachschlage-Modul (LU) zum Nachschlagen einer zweiten Signatur (SG2i) eines zweiten Teilsatzes (SS2i) von angeordneten Bestandteilen (COi) von dem angefragten Content-Namen (RN) in dem ersten Block (B1),
- ein Überprüfungsmodul (CM) zum Vergleichen des genannten zweiten Teilsatzes (SS2i) mit einem Content-Namen (Ni) von der Routingtabelle (RT), wenn eine zweite Signatur des zweiten Teilsatzes in dem ersten Block referenziert ist, wobei, wenn der genannte zweite Teilsatz mit einem Content-Namen von der Routingtabelle übereinstimmt, der Content-Router geeignet ist, um die Anfrage durch eine Weiterleitungs-Schnittstelle weiterzuleiten, die dem genannten übereinstimmenden Content-Namen zugeordnet ist.

15. Content-Router (CR1) gemäß Anspruch 14, wobei das Initialisierungsmodul (IM) weiterhin zum größenmäßigen Anpassen der Anzahl von Elementen (Ei) des ersten Blocks (B1) an die Anzahl von Elementen eines Cache-Speicherblocks von einem Speicher geeignet ist, der in dem ersten Content-Router (CR1) umfasst ist, wobei der genannte Speicher eine Vielzahl von Cache-Speicherblöcken umfasst.

## Revendications

1. Procédé pour un routeur de contenu (CR1) dans un réseau (NW) pour transférer une requête (R) qui comprend un nom de contenu demandé en requête (RN) qui est un jeu de composants ordonnés (COi), ledit routeur de contenu (CR1) comprenant une table de routage (RT) et une première pluralité de noms de contenu (Ni) et une pluralité d'interfaces de transfert (Fi), ladite table de routage (RT) associant chaque nom de contenu (Ni) pris parmi la première pluralité de noms de contenu (Ni) à au moins une interface de transfert (Fi) prise parmi la pluralité d'interfaces de transfert (Fi), ledit procédé comprenant l'étape d'initialisation qui suit qui est réalisée par le routeur de contenu (CR1) :
- l'initialisation (601) d'un réseau de référencement (RA) à l'aide de signatures (Si) de la première pluralité de noms de contenu (Ni), chaque signature (Si) étant une représentation d'au moins un nom de contenu (Ni) ; et
ledit procédé comprenant les étapes qui suivent qui sont réalisées en temps réel par le routeur de contenu (CR1) :
- la réception (603) de la requête (R) ;
- l'identification (605) d'un premier bloc (B1) pris parmi le réseau de référencement (RA) conformément à une première signature (SG1) d'un premier sous-jeu (SS1) de composants ordonnés (COi) pris parmi le nom de contenu demandé en requête (RN) ;
- la consultation (607) dans le premier bloc (B1) d'une seconde signature (SG2i) d'un second sous-jeu (SS2i) de composants ordonnés (COi) pris parmi le nom de contenu demandé en requête (RN) ; puis
- si la seconde signature (SG2i) du second sous-jeu (SS2i) est référencée (608) dans le premier bloc (B1), la vérification (609) de si ledit second sous-jeu (SS2i) correspond à un nom de contenu (Ni) pris parmi la table de routage (RT) ; puis
- si ledit second sous-jeu (SS2i) correspond (610) à un nom de contenu (RNi) pris parmi la table de routage (RT), le transfert (611) de la requête (R) par l'intermédiaire d'une interface de transfert (Fi) qui est associée audit nom de contenu de correspondance (Ni).

2. Procédé selon la revendication 1, dans lequel l'étape de consultation (607) est réalisée de façon itérative avec des variantes du second sous-jeu (SS2i) du nom de contenu demandé en requête (RN).

3. Procédé selon la revendication 2, dans lequel une variante initiale du second sous-jeu (SS20) est le nom de contenu demandé en requête (RN), et l'étape de consultation (607) est réalisée de façon itérative depuis la plus longue des variantes jusqu'à la plus courte des variantes du second sous-jeu (SS2i).

4. Procédé selon l'une quelconque des revendications 2 et 3, comprenant en outre une étape de transfert (613) de la requête (R) à une interface de transfert par défaut (F0) si le premier bloc (B1) ne référence pas les secondes signatures (SG2i) des variantes des seconds sous-jeux (SS2i).

5. Procédé selon l'une quelconque des revendications 1 à 4, dans lequel les signatures (Si) de la première pluralité de noms de contenu (Ni), la première signature (SG1) du premier sous-jeu (SS1) et la seconde signature (SG2i) du second sous-jeu (SS2i) sont déterminées à partir d'au moins une fonction de hachage (SFi) qui est appliquée respectivement sur la première pluralité de noms de contenu (Ni), sur le premier sous-jeu (SS1) et sur le second sous-jeu (SS2i).

6. Procédé selon la revendication 5, dans lequel l'au moins une fonction de hachage (SFi) est une fonction qui est sélectionnée parmi le groupe qui est constitué par une fonction de hachage "CRC", une fonction de hachage "total de contrôle" et une fonction de hachage "Fowler-Noll-Vo".

7. Procédé selon l'une quelconque des revendications 1 à 6, dans lequel le réseau de référencement (RA) est un "filtre de Bloom à préfixe".

8. Procédé selon l'une quelconque des revendications 1 à 7, dans lequel l'étape d'identification (605) identifie un second bloc (B2) pris parmi le réseau de référencement (RA) conformément à un indicateur d'expansion (XI) qui est compris dans le premier bloc (B1), et l'étape de consultation (607) est réalisée dans le second bloc (B2) conformément audit indicateur d'expansion (XI).

9. Procédé selon l'une quelconque des revendications 1 à 8, dans lequel chaque nom de contenu (Ni) pris parmi la première pluralité de noms de contenu (Ni) est un jeu de composants ordonnés (COj), et dans lequel l'étape d'initialisation (601) du réseau de référencement (RA) comprend en outre les étapes qui suivent :
- la sélection (615) du premier bloc (B1) conformément à une signature de racine (RS) d'un sous-jeu de racine (RSS) de composants ordonnés (COj) pris parmi un nom de contenu (Ni) pris parmi la première pluralité de noms de contenu (Ni) ; et
- l'initialisation (617) du premier bloc (B1) à l'aide de signatures (Si) d'une deuxième pluralité de noms de contenu (Ni) qui est comprise dans la première pluralité de noms de contenu (Ni), chaque nom de contenu (Ni) pris parmi ladite deuxième pluralité de noms de contenu (Ni) partageant le même sous-jeu de racine (RSS).

10. Procédé selon la revendication 9, dans lequel l'étape d'initialisation (601) du réseau de référencement (RA) comprend en outre les étapes qui suivent :
- si le nombre de signatures (Si) de la deuxième pluralité de noms de contenu (Ni) pour initialiser le premier bloc (B1) est supérieur à un seuil d'expansion, l'identification (619) d'une troisième pluralité de noms de contenu (Ni) prise parmi la deuxième pluralité de noms de contenu (Ni) conformément à un critère d'expansion ;
- la sélection (621) du second bloc (B2) pris parmi le réseau de référencement (RA) conformément à une signature d'un sous-jeu choisi (CS) de composants ordonnés (COj) pris parmi un nom de contenu (Ni) pris parmi la troisième pluralité de noms de contenu (Ni), ledit sous-jeu choisi (CS) étant sélectionné conformément au critère d'expansion ; et
- le déplacement (623), depuis le premier bloc (B1) jusqu'au second bloc (B2), des signatures (Si) d'une quatrième pluralité de noms de contenu (Ni) qui est comprise dans la troisième pluralité de noms de contenu (Ni), ladite quatrième pluralité de noms de contenu (Ni) comprenant des noms de contenu (Ni) qui partagent le sous-jeu choisi (CS).

11. Procédé selon la revendication 10, dans lequel le seuil d'expansion est déterminé à partir d'une cible de probabilité positive fausse qui est associée au premier bloc (B1).

12. Procédé selon l'une quelconque des revendications 10 et 11, dans lequel le critère d'expansion est un critère qui porte sur le nombre de composants pris parmi le jeu de composants ordonnés (COj) pris parmi les noms de contenu (Ni) de la deuxième pluralité de noms de contenu (Ni).

13. Procédé selon la revendication 8 et selon l'une quelconque des revendications 10 à 12, dans lequel l'indicateur d'expansion (XI) est défini pendant l'étape de déplacement (623) des signatures (Si) de la quatrième pluralité de noms de contenu (N1) depuis le premier bloc (B1) jusqu'au second bloc (B2).

14. Routeur de contenu (R1) pour un réseau (NW) pour transférer une requête (R) qui comprend un nom de contenu demandé en requête (RN) qui est un jeu de composants ordonnés (COi), ledit routeur de contenu (CR1) comprenant une table de routage (RT) et une première pluralité de noms de contenu (Ni) et une pluralité d'interfaces de transfert (Fi), ladite table de routage (RT) associant chaque nom de contenu (Ni) pris parmi la première pluralité de noms de contenu (Ni) à au moins une interface de transfert (Fi) prise parmi la pluralité d'interfaces de transfert (Fi), ledit routeur de contenu (CR1) comprenant :
- un module d'initialisation (IM) pour initialiser un réseau de référencement (RA) à l'aide de signatures (Si) de la première pluralité de noms de contenu (Ni), chaque signature (Si) étant une représentation d'au moins un nom de contenu (Ni) ;
- un module d'identification (ID) pour identifier un premier bloc (B1) pris parmi le réseau de référencement (RA) conformément à une première signature (SG1) d'un premier sous-jeu (SS1) de composants ordonnés (COi) pris parmi le nom de contenu demandé en requête (RN), ;
- un module de consultation (LU) pour consulter dans le premier bloc (B1) une seconde signature (SG2i) d'un second sous-jeu (SS2i) de composants ordonnés (COi) pris parmi le nom de contenu demandé en requête (RN) ; et
- un module de vérification (CM) pour comparer ledit second sous-jeu (SS2i) avec un nom de contenu (Ni) en provenance de la table de routage (RT) si ladite seconde signature du second sous-jeu est référencée dans le premier bloc, dans lequel, si ledit second sous-jeu correspond à un nom de contenu pris parmi la table de routage, le routeur de contenu est adapté de manière à ce qu'il transfère la requête par l'intermédiaire d'une interface de transfert qui est associée audit nom de contenu de correspondance.

15. Routeur de contenu (CR1) selon la revendication 14, dans lequel le module d'initialisation (IM) est en outre adapté de manière à ce qu'il dimensionne le nombre d'éléments (Ei) du premier bloc (B1) par rapport au nombre d'éléments d'un bloc de mémoire cache en provenance d'une mémoire qui est constituée dans le premier routeur de contenu (CR1), ladite mémoire comprenant une pluralité de blocs de mémoire cache.
